# EUROPEAN PATENT SPECIFICATION

(11) **EP 4 039 037 B1**
(45) Date of publication and mention of the grant of the patent: **18.11.2026**
(21) Application number: 20890216.3
(22) Date of filing: 19.11.2020
(51) Int. Cl.: H04W 72/02, H04W 72/56

(54) **DATA TRANSMISSION METHOD, DATA TRANSMISSION DEVICE, NON-TRANSITORY COMPUTER READABLE MEDIUM, AND CHIP**
DATENÜBERTRAGUNGSVERFAHREN, DATENÜBERTRAGUNGSVORRICHTUNG, NICHTFLÜCHTIGES COMPUTERLESBARES MEDIUM UND CHIP
PROCÉDÉ DE TRANSMISSION DE DONNÉES, DISPOSITIF DE TRANSMISSION DE DONNÉES, SUPPORT LISIBLE PAR ORDINATEUR NON TRANSITOIRE ET PUCE

(30) Priority: 19.11.2019 US 201962937426 P
(43) Date of publication of application: 10.08.2022
(73) Proprietor: GUANGDONG OPPO MOBILE TELECOMMUNICATIONS CORP., LTD., Dongguan, Guangdong 523860 (CN)
(72) Inventor: LIN, Huei-Ming, Taipei Taiwan 111 (TW); ZHAO, Zhenshan, Dongguan, Guangdong 523860 (CN); LU, Qianxi, Dongguan, Guangdong 523860 (CN)
(74) Representative: Santarelli
(86) International application number: PCT/CN2020/130204
(87) International publication number: WO 2021/098795

(56) References cited:
- WO-A1-2018/164476
- WO-A1-2018/174630
- CN-A- 109 391 972
- CN-A- 109 526 255
- ZTE ET AL: "Discussion on QoS management", vol. RAN WG1, no. Chongqing, China; 20191014 - 20191020, 6 October 2019 (2019-10-06), XP051808903, Retrieved from the Internet <URL:https://ftp.3gpp.org/tsg_ran/WG1_RL1/TSGR1_98b/Docs/R1-1910300.zip R1-1910300 Discussion on QoS management.docx> [retrieved on 20191006]
- SHARP: "Discussion on priority value in LTE V2X", vol. RAN WG2, no. Chongqing, China; 20191014 - 20191018, 3 October 2019 (2019-10-03), XP051803883, Retrieved from the Internet <URL:https://ftp.3gpp.org/tsg_ran/WG2_RL2/TSGR2_107bis/Docs/R2-1912450.zip R2-1912450.DOCX> [retrieved on 20191003]
- "3 Generation Partnership Project; Technical Specification Group Radio Access Network; Evolved Universal Terrestrial Radio Access (E-UTRA); Physical layer procedures (Release 15)", vol. RAN WG1, no. V15.7.0, 28 September 2019 (2019-09-28), pages 477 - 533, XP051785082, Retrieved from the Internet <URL:ftp://ftp.3gpp.org/Specs/archive/36_series/36.213/36213-f70.zip 36213-f70_s14-xx.docx> [retrieved on 20190928]
- HUAWEI ET AL: "Procedure for P-UE partial sensing", vol. RAN WG1, no. Reno, USA; 20161114 - 20161118, 5 November 2016 (2016-11-05), XP051189765, Retrieved from the Internet <URL:http://www.3gpp.org/ftp/tsg_ran/WG1_RL1/TSGR1_87/Docs/> [retrieved on 20161105]
- CATT: "Correction and Clarification to TS 36.331", 3GPP DRAFT; R2-1702066, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20170213 - 20170217, 20 February 2017 (2017-02-20), Mobile Competence Centre ; 650, route des Lucioles ; F-06921 Sophia-Antipolis Cedex ; France, XP051237190

## Description

### TECHNICAL FIELD

The present disclosure relates to communication technology, in particular to a data transmission method, a data transmission device, a non-transitory computer-readable medium, and a chip for sidelink communication.

### BACKGROUND

The statements in this section merely provide information related to the present disclosure and may not constitute prior art. Further, the content in this section may be used to define a concept related to the invention.

During the development of long-term evolution - vehicle-to-everything (LTE-V2X) communication, two sidelink resource selection modes are supported, namely mode 3 for network scheduled and mode 4 for UE autonomous selection.

In order to avoid multiple UEs selecting same or overlapping sidelink resources for transmissions and causing collisions, it is necessary for a transmitting UE to first perform resource sensing to identify already reserved resources by other UEs before selecting unused/unoccupied resources for its own transmission.

The document ZTE EL AL: "Discussion on QoS management", 3GPP DARFT; R1-1910300 DISCUSSION ON QOS MANAGEMENT, 3RD GENERATION PARTNERSHIP PROJECT (3GPP), MOBILE COMPETENCE CENTRE; 650, ROUTE DES LUCIOLES; F-06921, SOPHIA-ANTIPOLIS CEDEX; FRANCE, RAN WG1, Chongqing China; 20191014-20191020 6 October 2019 (2019-10-06) discusses QoS mechanisms and congestion control for NR V2X PC5.

### SUMMARY

A data transmission method, a data transmission device, a non-transitory computer readable medium, and a chip for sidelink communication are provided. The invention is set out in the appended set of claims.

### BRIEF DESCRIPTION OF THE DRAWINGS

The drawings are used merely for illustration purposes but not for limiting the invention.
- Fig. 1 shows a flow chart of a method; and
- Fig. 2 shows an exemplary UE.

### DETAILED DESCRIPTION

According to various embodiments, method for sidelink priority threshold selection in LTE V2X communication may be provided, for example to vehicles (for example cars) and user devices (smartphones) equipped with 3GPP Release 15 or beyond 4G LTE-V2X and 5G NR-V2X capable communication modem chipset.

According to LTE sidelink mode 4 resource selection procedure, the UE may first identify reserved resources by decoding sidelink control information (SCI) transmitted from other UEs and measure physical sidelink shared channel (PSSCH) reference signal received power (RSRP) in the associated data resources. If the measured PSSCH RSRP level is above a certain threshold level, the UE may consider the associated sidelink resources are not available for selection. That is, they should be excluded from a candidate resource set for selection. Likewise, if the measured PSSCH RSRP is below the threshold level (e.g. due to far away distance), the UE considered the reserved resources are available for selection. The PSSCH RSRP threshold may be defined as a function of transmission message priority level and reception message priority level. There are 8 levels of sensing priority defined for LTE-V2X messages as *sensingPriority* = Integer (1...8). Considering 8 levels of priority for the message to be transmitted and also 8 levels of priority for the received message, there are in total 64 possible different priority combinations, so there are 64 different threshold levels for each transmission and reception message priority pairs. These threshold levels may be (pre-)configurable and they are represented in 3GPP TS36.331 and TS38.331 as an information element, *SL-ThresPSSCH-RSRP-List.* According to various embodiments, the exact PSSCH RSRP threshold level that should be used for the purpose of resource exclusion may be derived.

According to various embodiments, in order for an LTE sidelink mode 4 UE or an NR sidelink mode 2 UE to correctly select a right threshold among the configured set of thresholds (*SL-ThresPSSCH-RSRP-List*) to determine if a reserved sidelink resource should be excluded from a candidate resource set based on corresponding transmission and reception priorities, the priority threshold selection equation may be defined as i = (*a* - 1) * 8 + *b,* wherein *a* is the priority of message to be transmitted and b is the priority of message received. As such, the i-th *SL-ThresPSSCH-RSRP* field in the *SL-ThresPSSCH-RSRP-List* may have a current value range between ((1-1)*8+1)=1 and ((8-1)*8+8)=64, which may point to the full range of the *SL-ThresPSSCH-RSRP-List* as specified. Therefore, the UE may then select a correct and appropriate threshold levels that corresponds to the right Tx and Rx message priorities during the resource exclusion and selection procedure.

According to various embodiments, to resolve the issue of erroneous derivation of PSSCH RSRP thresholds (*Th_{prio_{TX},prio_{RX}}*), the priority threshold selection equation may be defined to *i =* (*a* - 1) * 8 + *b.*

As such, the i-th *SL-ThresPSSCH-RSRP* field in the *SL-ThresPSSCH-RSRP-List* may have a current value range between ((1-1)*8+1)=1 and ((8-1)*8+8)=64, which may point to the full range of the *SL-ThresPSSCH-RSRP-List* as it was intended.

Therefore, the UE may then select a correct and appropriate threshold levels that corresponds to the right Tx and Rx message priorities during the resource exclusion and selection procedure.

Consequently, the UE may not suffer from not finding suitable resources to transmit its messages and its V2X communication performance is expected to improve.

Furthermore, this definition of priority threshold selection equation may apply to the cases when partial sensing is configured and partial sensing is not configured by higher layers.

The methods and devices according to various embodiments may be applied to TS 36.213 v16.2.0 (2020-06) for LTE V2X as will be described in the following.

According to various embodiments, a UE procedure for determining the subset of resources to be reported to higher layers in PSSCH resource selection in LTE sidelink transmission mode 4 and in sensing measurement in LTE sidelink transmission mode 3 may be provided as follows.

In LTE sidelink transmission mode 4, when requested by higher layers in subframe *n* for a carrier, the UE may determine the set of resources to be reported to higher layers for PSSCH transmission according to the steps described herein. Parameter *L*_{subCH} may be the number of sub-channels to be used for the PSSCH transmission in a subframe, *P*_{rsvp_TX} the resource reservation interval, and *prio_{TX}* the priority to be transmitted in the associated sidelink control information (SCI) format 1 by the UE are all provided by higher layers, for example by the medium access control (MAC) layer whenever there is SL data available for transmission.

The number of subframes in one set of the time and frequency resources for transmission opportunities of PSSCH is given by *Cᵣₑₛₑₗ* and it may be determined by 10*SL_RESOURCE_RESELECTION_COUNTER, where SL_RESOURCE_RESELECTION_COUNTER if configured, else *Cᵣₑₛₑₗ* is set to 1.

In sidelink transmission mode 3, when requested by higher layers in subframe n for a carrier, the UE may determine the set of resources to be reported to higher layers in sensing measurement according to the steps described herein. Parameters *L*_{subCH}, *P*_{rsvp_TX} and *prio_{TX}* may be provided by higher layers (e.g. the MAC layer).

*Cᵣₑₛₑₗ* is determined by *Cᵣₑₛₑₗ* =10*SL_RESOURCE_RESELECTION_COUNTER, where SL_RESOURCE_RESELECTION_COUNTER is provided by higher layers (e.g. the MAC layer).

If partial sensing is not configured by higher layers then the following steps may be used:
1) A candidate single-subframe resource for PSSCH transmission *R*_{x,y} may be defined as a set of *L*_{subCH} contiguous sub-channels with sub-channel *x*+*j* in subframe ${t}_{y}^{SL}$ where *j* = 0,..., *L*_{subCH} -1. The UE may assume that any set of *L*_{subCH} contiguous sub-channels included in the corresponding PSSCH resource pool, which is a collection of time and frequency resources for PSSCH transmission, within the time interval [*n+T*₁,*n+T*₂] corresponds to one candidate single-subframe resource, where selections of *T*₁ and *T*₂ are up to UE implementations under *T*₁ ≤ 4 and *T*₂ₘᵢₙ (*prio_{TX}*) ≤ *T*₂ ≤ 100, if *T*₂ₘᵢₙ (*prio_{TX}*) is provided by higher layers for *prio_{TX}*, otherwise 20 ≤ *T*₂ ≤ 100. UE selection of *T*₂ may fulfil the latency requirement. The total number of the candidate single-subframe resources may be denoted by *M*ₜₒₜₐₗ.
2) The UE may monitor subframes ${t}_{n ′ - 10 \times {P}_{step}}^{SL} , {t}_{n ′ - 10 \times {P}_{step} + 1}^{SL} , … , {t}_{n ′ - 1}^{SL}$ except for those in which its transmissions occur, where ${t}_{n ′}^{SL} = n$ if subframe n belongs to the set $\left({t}_{0}^{SL},{t}_{1}^{SL},…,{t}_{{T}_{max}}^{SL}\right)$, otherwise subframe ${t}_{n ′}^{SL}$ is the first subframe after subframe n belonging to the set $\left({t}_{0}^{SL},{t}_{1}^{SL},…,{t}_{{T}_{max}}^{SL}\right)$. The UE may perform the behaviour in the following steps based on PSCCH decoded and S-RSSI measured in these subframes.
3) The parameter *Th_{a,b}* may be set to the value indicated by the i-th *SL-ThresPSSCH-RSRP* field in *SL-ThresPSSCH-RSRP-List* where i = (*a* - 1) * 8 + *b.*
4) The set *S_{A}* may be initialized to the union of all the candidate single-subframe resources. The set *S_{B}* is initialized to an empty set.
5) The UE may exclude any candidate single-subframe resource *R*_{x,y} from the set *S_{A}* if it meets all the following conditions:
   - the UE has not monitored subframe ${t}_{z}^{SL}$ in Step 2.
   - there is an integer *j* which meets $y + j \times {P}_{rsvp _ TX}^{′} = z + {P}_{step} \times k \times q$ where j=0, 1, ..., ${C}_{resel} - 1 , {P}_{rsvp _ TX}^{′} = {P}_{step} \times {P}_{rsvp _ TX} / 100$, *k* is any value allowed by the higher layer parameter *estrictResourceReservationPeriod* and *q*=1,2,...,*Q.* Here, $Q = \frac{1}{k}$ if *k* < 1 and *n'* - *z* ≤ *Pₛₜₑₚ* × *k,* where ${t}_{n ′}^{SL} = n$ if subframe *n* belongs to the set ${t}_{0}^{SL} , {t}_{1}^{SL} , … , {t}_{{T}_{max}}^{SL}$, otherwise subframe ${t}_{n ′}^{SL}$ is the first subframe belonging to the set ${t}_{0}^{SL} , {t}_{1}^{SL} , … , {t}_{{T}_{max}}^{SL}$ after subframe *n;* and *Q* = 1 otherwise.
6) The UE may exclude any candidate single-subframe resource *R*_{x,y} from the set *S_{A}* if it meets all the following conditions:
   - the UE receives an SCI format 1 in subframe ${t}_{m}^{SL}$, and "Resource reservation" field and "Priority" field in the received SCI format 1 indicate the values *P*_{rsvp_RX} and *prio_{RX},* respectively. The resource reservation field with a value *P*_{rsvp_TX RX} may indicate the time periodicity (e.g. milli-second) in which the indicated resources are reserved by the received SCI. The priority field with a value *prio_{RX}* may indicate the priority level (from 1 to 8) of the SL message received.
   - PSSCH-RSRP measurement according to the received SCI format 1 is higher than *Th_{prio_{TX},prio_{RX}}.*
   - the SCI format received in subframe ${t}_{m}^{SL}$ or the same SCI format 1 which is assumed to be received in subframe(s) ${t}_{m + q \times {P}_{step} \times {P}_{rsvp _ RX}}^{SL}$ determines according to 14.1.1.4C the set of resource blocks and subframes which overlaps with ${R}_{x , y + j \times {P}_{rsvp _ TX}^{′}}$ for *q*=1, 2, *..., Q* and *j*=0, 1, ..., *Cᵣₑₛₑₗ*-1. $Q = \frac{1}{{P}_{rsvp _ RX}}$ if *P_{rsvp_RX}* < 1 *n' - m* ≤ *Pₛₜₑₚ* × *P_{rsvp_RX},* where ${t}_{n ′}^{SL} = n$ is subframe n belongs to the set $\left({t}_{0}^{SL},{t}_{1}^{SL},…,{t}_{{T}_{max}}^{SL}\right)$, otherwise subframe ${t}_{n ′}^{SL}$ is the first subframe after subframe n belonging to the set $\left({t}_{0}^{SL},{t}_{1}^{SL},…,{t}_{{T}_{max}}^{SL}\right)$; otherwise *Q* = 1.

If partial sensing is configured by higher layers then the following steps are used:
1) A candidate single-subframe resource for PSSCH transmission *R*_{x,y} may be defined as a set of *L*_{subCH} contiguous sub-channels with sub-channel *x*+*j* in subframe ${t}_{y}^{SL}$ where *j =* 0,..., *L*_{subCH} -1. The UE may determine by its implementation a set of subframes which consists of at least *Y* subframes within the time interval [*n + T*₁*, n + T*₂] where selections of *T*₁ and *T*₂ are up to UE implementations under *T*₁ ≤ 4 and *T*₂ₘᵢₙ (*prio_{TX}*) ≤ *T*₂ ≤ 100, if *T*₂ₘᵢₙ (*prio_{TX}*) is provided by higher layers for *prio_{TX},* otherwise 20 ≤ *T*₂ ≤ 100. UE selection of *T*₂ may fulfil the latency requirement and *Y* may be greater than or equal to the high layer parameter *minNumCandidateSF.* The UE may assume that any set of *L*_{subCH} contiguous sub-channels included in the corresponding PSSCH resource pool, which is a collection of time and frequency resources for PSSCH transmission, within the determined set of subframes correspond to one candidate single-subframe resource. The total number of the candidate single-subframe resources is denoted by*M*ₜₒₜₐₗ.
2) If a subframe ${t}_{y}^{SL}$ is included in the set of subframes in Step 1, the UE may monitor any subframe ${t}_{y - k \times {P}_{step}}^{SL}$ if k-th bit of the high layer parameter *gapCandidateSensing* is set to 1. The UE may perform the behaviour in the following steps based on PSCCH decoded and S-RSSI measured in these subframes.
3) The parameter *Th_{a,b}* may be set to the value indicated by the i-th *SL-ThresPSSCH-RSRP* field in *SL-ThresPSSCH-RSRP-List* where i = (*a* - 1) * 8 + *b.*
4) The set *S_{A}* may be initialized to the union of all the candidate single-subframe resources. The set *S_{B}* may be initialized to an empty set.
5) The UE may exclude any candidate single-subframe resource *R*_{x,y} from the set *S_{A}* if it meets all the following conditions:
   - the UE receives an SCI format 1 in subframe ${t}_{m}^{SL}$, and "Resource reservation" field and "Priority" field in the received SCI format 1 indicate the values *P*_{rsvp_RX} and *prio_{RX},* respectively. The resource reservation field with a value *P*_{rsvp_TX RX} may indicate the time periodicity (e.g. milli-second) in which the indicated resources are reserved by the received SCI. The priority field with a value *prio_{RX}* may indicate the priority level (from 1 to 8) of the SL message received.
   - PSSCH-RSRP measurement according to the received SCI format 1 is higher than *Th_{prio_{TX}},_{prio_{RX}}*.
   - the SCI format received in subframe ${t}_{m}^{SL}$ or the same SCI format 1 which is assumed to be received in subframe(s) ${t}_{m + q \times {P}_{step} \times {P}_{rsvp _ RX}}^{SL}$ determines the set of resource blocks and subframes which overlaps with ${R}_{x , y + j \times {P}_{rsvp _ TX}^{′}}$ for *q=1,* 2, *..., Q* and *j*=0, 1, ..., *Cᵣₑₛₑₗ* -1 . Here, $Q = \frac{1}{{P}_{rsvp _ RX}}$ if *Pᵣₛᵥₚ__{RX}* < 1 and *y' - m* ≤ *Pₛₜₑₚ* × *P*_{*rsvp*_}*_{RX} + Pₛₜₑₚ,* where ${t}_{y ′}^{SL}$ is the last subframe of the *Y* subframes , and *Q* = 1 otherwise.

The methods and devices according to various embodiments may be applied to TS 38.214 v16.2.0 (2020-06) or TS 38.214 v16.3.0 (2020-09) for NR sidelink as will be described in the following.

According to various embodiments, a UE procedure for determining the subset of resources to be reported to higher layers in PSSCH/PSCCH resource selection in NR sidelink resource allocation mode 2 may be provided as follows.

In NR sidelink resource allocation mode 2, the higher layer may request the UE to determine a subset of resources from which the higher layer may select resources for PSSCH/PSCCH transmission. To trigger this procedure, in slot *n,* the higher layer may provide the following parameters for this PSSCH/PSCCH transmission:
- the resource pool from which the resources are to be reported;
- L1 priority, *prio_{TX};*
- the remaining packet delay budget;
- the number of sub-channels to be used for the PSSCH/PSCCH transmission in a slot, *L*_{subCH;}
- optionally, the resource reservation interval, *P*_{rsvp_TX}, in units of ms.
- if the higher layer requests the UE to determine a subset of resources from which the higher layer may select resources for PSSCH/PSCCH transmission as part of re-evaluation or pre-emption procedure, the higher layer may provide a set of resources (*r*₀, *r*₁, *r*₂, ... ) which may be subject to re-evaluation and a set of resources ( ${r}_{0}^{′} , {r}_{1}^{′} , {r}_{2}^{′} , …$) which may be subject to pre-emption.

It may be up to UE implementation to determine the subset of resources as requested by higher layers before or after the slot ${r}_{i}^{"} - {T}_{3}$, where ${r}_{i}^{"}$ is the slot with the smallest slot index among (*r*₀, *r*₁, *r*₂, ...) and (*r*₀, ${r}_{0}^{′} , {r}_{1}^{′} , {r}_{2}^{′} , …$) , and T₃ is equal to ${T}_{proc , 1}^{SL}$, where ${T}_{proc , 1}^{SL}$ is defined in slots representing the time allowed for preparation of PSSCH/PSCCH in a given subcarrier spacing.

The following higher layer parameters affect this procedure:
- *sl-SelectionWindowList:* internal parameter *T*_{2*min*} may be set to the corresponding value from higher layer parameter *sl-SelectionWindowList* for the given value of *prio_{TX}*;
- *sl-ThresPSSCH-RSRP-List:* this higher layer parameter may provide an RSRP threshold for each combination (*pᵢ, pⱼ*), where *pᵢ* is the value of the priority field in a received SCI format 1-A and *p*ⱼ is the priority of the transmission of the UE selecting resources; for a given invocation of this procedure, *p*ⱼ = *prio_{TX}*;
- *sl-RS-ForSensing* may select if the UE uses the PSSCH-RSRP or PSCCH-RSRP measurement;
- *sl-ResourceReservePeriodList-r16;*
- *sl-SensingWindow:* internal parameter *T*₀ may be defined as the number of slots corresponding to *sl-SensingWindow* ms;
- *sl-TxPercentageList:* internal parameter *X* for a given *prio_{TX}* may be defined as *sl-TxPercentageList (prio_{TX})* converted from percentage to ratio;
- *sl-PreemptionEnable:* if *sl-PreemptionEnable-r16* may be provided, and if it is not equal to 'enabled', internal parameter *prioₚᵣₑ* may be set to the higher layer provided parameter *sl-PreemptionEnable.*

The resource reservation interval, *P*_{rsvp_TX}, if provided, may be converted from units of *ms* to units of logical slots, resulting in ${P}_{rsvp_TX}^{′}$.

( ${t}_{0}^{SL} , {t}_{1}^{SL} , {t}_{2}^{SL} , …$) may denote the set of slots which can belong to a sidelink resource pool.

The following steps may be used:
1) A candidate single-slot resource for transmission *R*_{x,y} may be defined as a set of *L*_{subCH} contiguous sub-channels with sub-channel x+j in slot ${t}_{y}^{SL}$ where *j* = 0,..., *L*_{subCH} - 1. The UE shall assume that any set of *L*_{subCH} contiguous sub-channels included in the corresponding resource pool within the time interval *[n* + *T*₁, *n* + *T*₂] correspond to one candidate single-slot resource, where
   - selection of *T*₁ is up to UE implementation under $0 \leq {T}_{1} \leq {T}_{proc , 1}^{SL}$, where ${T}_{proc , 1}^{SL}$ is defined in slots in Table 8.1.4-2 (of TS 38.214) where *µ_{SL}* is the SCS configuration of the SL BWP;
   - if *T*_{2*min*} is shorter than the remaining packet delay budget (in slots) then *T*₂ is up to UE implementation subject to *T*_{2*min*} ≤ *T*₂ ≤ remaining packet budget (in slots); otherwise *T*₂ is set to the remaining packet delay budget (in slots). The total number of candidate single-slot resources may be denoted by *M*ₜₒₜₐₗ.
2) The sensing window may be defined by the range of slots $\left[n-{T}_{0},n-{T}_{proc , 0}^{SL}\right)$ where *T*₀ is defined above and ${T}_{proc , 0}^{SL}$ is defined in slots representing the time allowed for the UE to finalize its sensing operation before resource selection trigger in slot n. The UE may monitor slots which can belong to a sidelink resource pool within the sensing window except for those in which its own transmissions occur. The UE may perform the behaviour in the following steps based on PSCCH decoded and RSRP measured in these slots.
3) The internal parameter *Th*(*pᵢ, pⱼ*) may be set to the corresponding value of RSRP threshold indicated by the i-th field in *sl-ThresPSSCH-RSRP-List-r16,* where i = *pᵢ* + (*pⱼ* - 1) * 8.
4) The set *S_{A}* may be initialized to the set of all the candidate single-slot resources.
5) The UE may exclude any candidate single-slot resource *R*_{x,y} from the set *S_{A}* if it meets all the following conditions:
   - the UE has not monitored slot ${t}_{m}^{SL}$ in Step 2.
   - for any periodicity value allowed by the higher layer parameter *sl-ResourceReservePeriodList-r16* and a hypothetical SCI format 1-A received in slot ${t}_{m}^{SL}$ with "Resource reservation period" field set to that periodicity value and indicating all subchannels of the resource pool in this slot, condition c in step 6 would be met.
6) The UE may exclude any candidate single-slot resource *R*_{x,y} from the set *S_{A}* if it meets all the following conditions:
   a) the UE receives an SCI format 1-A in slot ${t}_{m}^{SL}$, and "Resource reservation period" field, if present, and "Priority" field in the received SCI format 1-A indicate the values *P*_{rsvp_RX} and *prio_{RX},* respectively. The resource reservation field with a value *P*_{rsvp_RX} may indicate the time periodicity (e.g. milli-second) in which the indicated resources are reserved by the received SCI. The priority field with a value *prio_{RX}* may indicate the priority level (from 1 to 8) of the SL message received.
   b) the RSRP measurement performed, for the received SCI format 1-A, is higher than *Th*(*prio_{RX}, prio_{TX}*)*;*
   c) the SCI format received in slot ${t}_{m}^{SL}$ or the same SCI format which, if and only if the "Resource reservation period" field is present in the received SCI format 1-A, is assumed to be received in slot(s) ${t}_{m + q \times {P}_{rsvp _ RX}^{′}}^{SL}$ determines the set of resource blocks and slots which overlaps with ${R}_{x , y + j \times {P}_{rsvp _ TX}^{′}}$ for *q*=1, 2, ..., *Q* and *j*=0, 1, *..., Cᵣₑₛₑₗ* - 1. Here, ${P}_{rsvp _ RX}^{′}$ is *P*_{rsvp_RX} converted to units of logical slots, $Q = \left⌈\frac{{T}_{scal}}{{P}_{rsvp _ RX}}\right⌉$ if *P*_{*rsvp*_}*_{RX} < T_{scal}* and $n ′ - m \leq {P}_{rsvp _ RX}^{′}$, where ${t}_{n ′}^{SL} = n$ if slot n belongs to the set $\left({t}_{0}^{SL},{t}_{1}^{SL},…,{t}_{{T}_{max}}^{SL}\right)$, otherwise slot ${t}_{n ′}^{SL}$ is the first slot after slot n belonging to the set $\left({t}_{0}^{SL},{t}_{1}^{SL},…,{t}_{{T}_{max}}^{SL}\right)$; otherwise *Q = 1. T_{scal}* may be set to selection window size *T*₂ converted to units of *ms.*
7) If the number of candidate single-slot resources remaining in the set *S_{A}* is smaller than *X · M*ₜₒₜₐₗ, then *Th*(*pᵢ, pⱼ*) is increased by 3 dB for each priority value *Th(pᵢ, pⱼ*) and the procedure continues with step 4.

The methods and devices as described herein may be applied to 4G standard (TS 36.213) for LTE sidelink. Likewise, the methods and devices as described herein may be applied to 5G standard (TS 38.214) for NR sidelink. Likewise, the methods and devices as described herein may be applied to 5G standard (TS 38.214 v16.2.0 2020-06 or TS 38.214 v16.3.0 2020-09).

As described above, in order to resolve the existing problem of erroneous derivation of PSSCH RSRP thresholds (Th_{prio_{TX},prio_{RX}}) and causing the UE to use threshold levels that are too high, and thus finding less number of available candidate resources to select from, the priority threshold selection equation may be defined to i = (a - 1) * 8 + b.

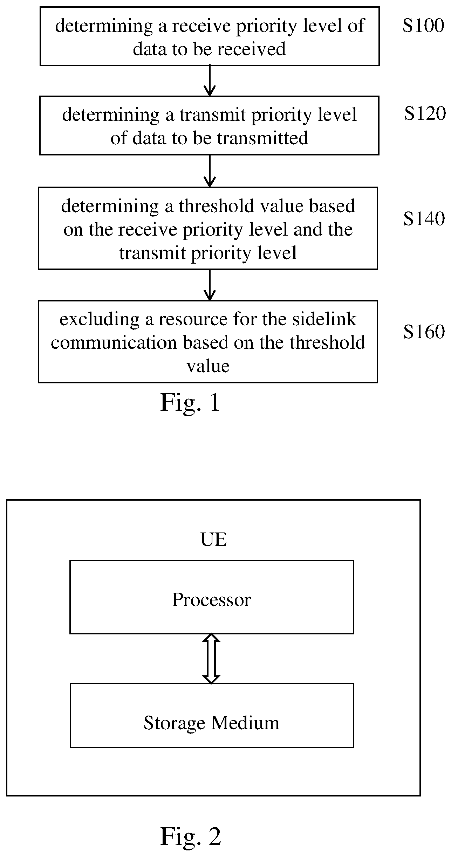

Fig. 1 shows a flow diagram illustrating a data transmission method performed by a device, wherein the device is configured for sidelink communication. At S100, a receive priority level of data to be received is determined. At S120, a transmit priority level of data to be transmitted is determined. At S140, a threshold value may be determined (for example based on the receive priority level and the transmit priority level). However, it will be understood that the threshold value may be determined based on any other mechanism. At S160, a resource is excluded for the sidelink communication based on the threshold value.

According to various embodiments, the receive priority level and/ or the transmit priority level may be provided to the device by a higher communication layer.

According to various embodiments, the receive priority level and/ or the transmit priority level may be provided to the device in a SCI format, for example SCI format 1 or SCI format 1-A. For example, in NR sidelink, the receive priority level is provided in SCI format 1-A. For example in LTE sidelink, the receive priority level is provided in SCI format 1.

According to the invention, the threshold value is determined based on a threshold index.

According to the invention, the threshold index, i, is determined according to the formula *i* = (*a* - 1) * 8 + *b,* wherein a indicates the transmit priority level, and wherein b indicates the receive priority level.

According to various embodiments, the threshold value may be determined based on the threshold index and a table of threshold values.

According to various embodiments, the data transmission method may further include resource sensing to determine a threshold.

According to various embodiments, the data transmission method may further include determining whether to exclude a resource from a list of candidate resources for sidelink communication based on the resource sensing and the threshold.

According to various embodiments, the resource sensing may include or may be sensing in which partial sensing is configured.

According to various embodiments, the resource sensing may include or may be sensing in which partial sensing is not configured.

According to various embodiments, the device may include or may be a user equipment (UE), for example as illustrated in Fig. 2, and the sidelink communication may include or may be communication between the user equipment and another user equipment.

According to various embodiments, the sidelink communication may include or may be communication according to 4G for sidelink communication.

According to various embodiments, the sidelink communication may include or may be communication according to 5G for sidelink communication.

According to various embodiments, the sidelink communication may include or may be communication according to NR sidelink mode 2 operation.

According to various embodiments, the sidelink communication may include or may be communication according to LTE sidelink mode 4 operation.

According to various embodiments, the threshold value is determined based on the receive priority level and the transmit priority level.

A device configured to carry out the method as described herein may be provided, for example a UE as shown in Fig. 2.

According to various embodiments, the device may include transmitting means configured to transmit data using sidelink communication; and receiving means configured to receive data using sidelink communication.

According to various embodiments, the device may include one or more processors and one or more memory storing program instructions, the device being configured, when the program instructions are executed by the one or more processors, to carry out the method as described herein.

A computer program containing program instructions which, when executed by one or more processors in a device, cause the device to carry out the method as described herein may be provided.

A carrier (for example a computer readable medium) for carrying the computer program as described herein may be provided.

The following References may be helpful for understanding the present disclosure:

| | |
|---|---|
| [1] | 3GPP TS 38.211 V15.5.0: "NR; Physical channels and modulation" |
| [2] | 3GPP TS 38.212 V15.5.0: "NR; Multiplexing and channel coding" |
| [3] | 3GPP TS 38.213 V15.5.0: "NR; Physical layer procedures for control" |
| [4] | 3GPP TS 38.214 V15.5.0: "NR; Physical layer procedures for data" |
| [5] | 3GPP TS 38.215 V15.5.0: "NR; Physical layer measurements" |
| [6] | 3GPP TS 38.321 V15.5.0: "NR; Medium Access Control (MAC) protocol specification" |
| [7] | 3GPP TS 38.331 V15.5.0: "NR; Radio Resource Control (RRC) protocol specification" |

Some of the abbreviations used in this present disclosure are listed below:

| | |
|---|---|
| 3GPP | 3^{rd} Generation Partnership Project |
| 5G | 5^{th} Generation |
| NR | New Radio |
| RRC | Radio Resource Control |
| MAC | Media Access Control |
| PSSCH | Physical sidelink shared channel |
| PSCCH | Physical sidelink control channel |
| RB | Resource Block |
| RSRP | Reference signal received power |
| SL | Sidelink |
| Tx | Transmission |
| Rx | Receive |

## Claims

1. A data transmission method performed by a device, wherein the device is configured for sidelink communication, the method comprising:
determining a receive priority level of data to be received;
determining a transmit priority level of data to be transmitted;
excluding a resource for the sidelink communication based on a threshold value,
wherein the threshold value is determined based on a threshold index, the threshold value is used to be compared with a physical sidelink shared channel, PSSCH, reference signal received power, RSRP, in the resource for the sidelink communication, and
**characterized in that** the threshold index, i, is determined according to the formula i = (*a* - 1) * 8 + *b*, wherein a indicates the transmit priority level, and wherein b indicates the receive priority level.

2. The data transmission method of claim 1,
**characterized in that** the receive priority level and/ or the transmit priority level is provided to the device by a higher communication layer.

3. The data transmission method of any one of claims 1 or 2,
**characterized in that** the receive priority level and/ or the transmit priority level is provided to the device in a sidelink control information, named SCI hereinafter, format.

4. The data transmission method of any one of claims 1 to 3,
**characterized in that** the threshold value is determined based on the threshold index and a table of threshold values.

5. The data transmission method of any one of claims 1 to 4, **characterized by** further comprising:
resource sensing to determine a threshold.

6. The data transmission method of claim 5, **characterized by** further comprising:
determining whether to exclude the resource from a list of candidate resources for sidelink communication based on the resource sensing and the threshold.

7. The data transmission method of any one of claims 5 or 6,
**characterized in that** the resource sensing comprises sensing in which partial sensing is configured.

8. The data transmission method of any one of claims 5 or 6,
**characterized in that** the resource sensing comprises sensing in which partial sensing is not configured.

9. The data transmission method of any one of claims 1 to 8,
wherein the sidelink communication comprises communication according to new radio, named NR, sidelink mode 2 operation.

10. A data transmission device, comprising one or more processors configured to execute program instructions stored in one or more memory to cause the data transmission device to carry out the method of any one of claims 1 to 9.

11. A non-transitory computer-readable medium, storing computer executable instructions for a device, wherein when the instructions are executed, cause the device to carry out the method of any one of claims 1 to 9.

12. A chip, **characterized by** comprising one or more processors configured to execute program instructions stored in one or more memory to cause a device installed with the chip to carry out the method of any one of claims 1 to 9.

## Patentansprüche

1. Datenübertragungsverfahren, das von einer Vorrichtung durchgeführt wird, wobei die Vorrichtung für eine Sidelink-Kommunikation konfiguriert ist, wobei das Verfahren umfasst:
Ermitteln einer Empfangsprioritätsstufe von zu empfangenden Daten;
Ermitteln einer Übertragungsprioritätsstufe von zu übertragenden Daten;
Ausschließen einer Ressource für die Sidelink-Kommunikation basierend auf einem Schwellenwert,
wobei der Schwellenwert basierend auf einem Schwellenwertindex ermittelt wird, wobei der Schwellenwert verwendet wird, um mit einer empfangenen Referenzsignalleistung, RSRP, eines physischen gemeinsam genutzten Sidelink-Kanals, PSSCH, in der Ressource für die Sidelink-Kommunikation verglichen zu werden, und
**dadurch gekennzeichnet, dass** der Schwellenwertindex i gemäß der Formel i = (a - 1) * 8 *+* b ermittelt wird, wobei a die Übertragungsprioritätsstufe anzeigt und wobei b die Empfangsprioritätsstufe anzeigt.

2. Datenübertragungsverfahren nach Anspruch 1,
**dadurch gekennzeichnet, dass** die Empfangsprioritätsstufe und/oder die Übertragungsprioritätsstufe der Vorrichtung von einer höheren Kommunikationsschicht bereitgestellt werden.

3. Datenübertragungsverfahren nach einem der Ansprüche 1 oder 2,
**dadurch gekennzeichnet, dass** die Empfangsprioritätsstufe und/oder die Übertragungsprioritätsstufe der Vorrichtung in einem Sidelink-Steuerinformationsformat, nachfolgend SCI-Format genannt, bereitgestellt werden.

4. Datenübertragungsverfahren nach einem der Ansprüche 1 bis 3,
**dadurch gekennzeichnet, dass** der Schwellenwert basierend auf dem Schwellenwertindex und einer Tabelle von Schwellenwerten ermittelt wird.

5. Datenübertragungsverfahren nach einem der Ansprüche 1 bis 4, **dadurch gekennzeichnet, dass** es ferner umfasst: eine Ressourcenerfassung zum Ermitteln eines Schwellenwerts.

6. Datenübertragungsverfahren nach Anspruch 5, **dadurch gekennzeichnet, dass** es ferner umfasst:
Ermitteln, basierend auf der Ressourcenerfassung und dem Schwellenwert, ob die Ressource aus einer Liste von Kandidatenressourcen für die Sidelink-Kommunikation auszuschließen ist.

7. Datenübertragungsverfahren nach einem der Ansprüche 5 oder 6,
**dadurch gekennzeichnet, dass** die Ressourcenerfassung ein Erfassen umfasst, in dem eine teilweise Erfassung konfiguriert ist.

8. Datenübertragungsverfahren nach einem der Ansprüche 5 oder 6,
**dadurch gekennzeichnet, dass** die Ressourcenerfassung ein Erfassen umfasst, bei dem eine teilweise Erfassung nicht konfiguriert ist.

9. Datenübertragungsverfahren nach einem der Ansprüche 1 bis 8,
wobei die Sidelink-Kommunikation eine Kommunikation gemäß einem NR-Sidelink-Modus-2-Betrieb (wobei New Radio NR genannt wird) umfasst.

10. Datenübertragungsvorrichtung, die einen oder mehrere Prozessoren umfasst, die konfiguriert sind zum Ausführen von Programmanweisungen, die in einem oder mehreren Speichern gespeichert sind, um die Datenübertragungsvorrichtung zu veranlassen, das Verfahren nach einem der Ansprüche 1 bis 9 auszuführen.

11. Nicht-flüchtiges computerlesbares Medium, in dem in einem Computer ausführbare Anweisungen für eine Vorrichtung gespeichert sind, wobei, wenn die Anweisungen ausgeführt werden, sie die Vorrichtung veranlassen, das Verfahren nach einem der Ansprüche 1 bis 9 auszuführen.

12. Chip, **dadurch gekennzeichnet, dass** er einen oder mehrere Prozessoren umfasst, die konfiguriert sind zum Ausführen von Programmanweisungen, die in einem oder mehreren Speichern gespeichert sind, um eine Vorrichtung, die mit dem Chip installiert ist, zu veranlassen, das Verfahren nach einem der Ansprüche 1 bis 9 durchzuführen.

## Revendications

1. Procédé de transmission de données réalisé par un dispositif, dans lequel le dispositif est configuré pour communication en liaison latérale, le procédé comprenant :
la détermination d'un niveau de priorité de réception de données destinées à être reçues ;
la détermination d'un niveau de priorité de transmission de données destinées à être transmises ;
l'exclusion d'une ressource pour la communication en liaison latérale sur la base d'une valeur seuil,
dans lequel la valeur seuil est déterminée sur la base d'un indice seuil, la valeur seuil est utilisée pour être comparée à une puissance reçue de signal de référence, Reference Signal Received Power RSRP, de canal partagé de liaison latérale physique, Physical Sidelink Shared CHannel PSSCH, dans la ressource pour la communication en liaison latérale, et
**caractérisé en ce que** l'indice seuil, i, est déterminé selon la formule i = (a - 1) * 8 + b, dans lequel a indique le niveau de priorité de transmission, et dans lequel b indique le niveau de priorité de réception.

2. Procédé de transmission de données de la revendication 1,
**caractérisé en ce que** le niveau de priorité de réception et/ou le niveau de priorité de transmission est fourni au dispositif par une couche de communication plus haute.

3. Procédé de transmission de données de l'une quelconque des revendications 1 ou 2,
**caractérisé en ce que** le niveau de priorité de réception et/ou le niveau de priorité de transmission est fourni au dispositif en un format d'informations de commande de liaison latérale, Sidelink Control Information, appelées SCI ci-après.

4. Procédé de transmission de données de l'une quelconque des revendications 1 à 3,
**caractérisé en ce que** la valeur seuil est déterminée sur la base de l'indice seuil et d'une table de valeurs seuils.

5. Procédé de transmission de données de l'une quelconque des revendications 1 à 4, **caractérisé en ce qu'**il comprend en outre :
la détection de ressource, pour déterminer un seuil.

6. Procédé de transmission de données de la revendication 5, **caractérisé en ce qu'**il comprend en outre :
la détermination du fait qu'il faut exclure ou non la ressource d'une liste de ressources candidates pour communication en liaison latérale sur la base de la détection de ressource et du seuil.

7. Procédé de transmission de données de l'une quelconque des revendications 5 ou 6,
**caractérisé en ce que** la détection de ressource comprend la détection dans laquelle une détection partielle est configurée.

8. Procédé de transmission de données de l'une quelconque des revendications 5 ou 6,
**caractérisé en ce que** la détection de ressource comprend la détection dans laquelle une détection partielle n'est pas configurée.

9. Procédé de transmission de données de l'une quelconque des revendications 1 à 8,
dans lequel la communication en liaison latérale comprend la communication selon une opération mode 2 de liaison latérale nouvelle radio, New Radio, appelée NR.

10. Dispositif de transmission de données, comprenant un ou plusieurs processeurs configurés pour exécuter des instructions de programme stockées dans une ou plusieurs mémoires pour amener le dispositif de transmission de données à effectuer le procédé de l'une quelconque des revendications 1 à 9.

11. Support non transitoire lisible par ordinateur, stockant des instructions d'ordinateur exécutables pour un dispositif, dans lequel, lorsque les instructions sont exécutées, elles amènent le dispositif à effectuer le procédé de l'une quelconque des revendications 1 à 9.

12. Puce, **caractérisée en ce qu'**elle comprend un ou plusieurs processeurs configurés pour exécuter des instructions de programme stockées dans une ou plusieurs mémoires pour amener un dispositif, sur lequel est installée, la puce à effectuer le procédé de l'une quelconque des revendications 1 à 9.
